# EUROPEAN PATENT APPLICATION

(11) **EP 0 960 841 A1**
(43) Date of publication of application: **01.12.1999**
(21) Application number: 99110322.7
(22) Date of filing: 27.05.1999
(51) Int. Cl.: B65G 39/02, B65G 15/52, B65G 15/60

(54) **Return roller for a slat conveyor**

(30) Priority: 27.05.1998 JP 14630998
(71) Applicant: TSUBAKIMOTO CHAIN CO., Osaka-shi, Osaka (JP)
(72) Inventor: Takahashi, Toshio, Toyonaka-shi, Osaka-fu (JP); Shibayama, Katsutoshi, Higashiosaka-shi, Osaka-fu (JP); Murakami, Yoshihiro, Yao-shi, Osaka-fu (JP); Ishii, Takashi, Daitou-shi, Osaka-fu (JP)
(74) Representative: Naumann, Ulrich, Dr.-Ing.

(57) **Abstract**

A return roller (18) includes a roller core (20) and an external ring (21). The roller core (20) has a shaft hole (26) formed therein at a central portion and axially extending therethrough. A shaft (11) fixed to a conveyor frame is inserted through the shaft hole (26) such that the roller core (20) is rotatably supported by the shaft (11). The external ring (21) is concentrically fitted onto the roller core (20). The outer circumferential surface of the external ring (21) supports the carrying surface of a slat. The product of the radius (21) of the outer circumferential surface of the external ring (21) and the friction coefficient between the outer circumferential surface of the external ring and the carrying surface of the slat is set greater than the product of the radius (22) of the shaft hole (26) and the friction coefficient between the shaft hole (26) and the shaft (11). The outer circumferential surface of the external ring (21) is formed from an elastomer softer than the carrying surface of the slat.

## Description

### BACKGROUND OF THE INVENTION

### 1. Field of the Invention:

The present invention relates generally to a slat conveyor, and more particularly to a return roller for the slat conveyor, adapted to support from underneath a slat chain traveling along a return passage of the slat conveyor.

### 2. Description of the Related Art:

A slat conveyor is used to convey articles, such as PET bottles and cans. The slat conveyor includes a conveyor frame, a driving sprocket and a driven pulley that are located in the vicinity of longitudinally opposite end portions of the conveyor frame, and a slat chain looped around and extending between the driving sprocket and the driven pulley along an upper forwarding passage and a lower return passage of the conveyor frame.

The slat chain includes a number of links which are each integrated with a slat and are endlessly pin-connected such that the slats face outward. The slat chain is driven in a circulative manner such that an article placed on the top surface (carrying surface) of each of the slats is conveyed along the forwarding passage.

The slat conveyor employs a return roller in order to prevent the slat chain from sagging during travel along the return passage. A shaft fixedly attached to the conveyor frame is inserted through a shaft hole extending through a central portion of the return roller such that the return roller is rotatably supported by the shaft. The return roller, in turn, supports the downward-facing carrying surfaces of the slats of the slat chain. As the slat chain travels, the return roller is rotated by means of a frictional force induced between the carrying surface and the peripheral surface of the return roller.

During operation of the slat conveyor, when a stopper member stops the article, such as a can or PET bottle, at a downstream end or an intermediate position of the forwarding passage, the articles that follow the stopped article are congested therebehind, while the slat chain keeps traveling with the carrying surfaces of the slats sliding along the bottoms of the congested articles.

In this case, if the friction coefficient between the carrying surface and the bottom of the article is relatively large and the article has a shape such that it is unstable, the article tends to fall down due to being dragging by the carrying surface of the advancing slat. In order to decrease the friction coefficient, soap water may be supplied to the carrying surfaces during conveyance of the articles. Because of a recent increase in use of PET bottles whose bottoms are rugged, i.e., a PET bottle whose bottom assumes an unstable petaloid form, the slat and the link tend to be integrally formed into a single element by use of a resin which produces a slippery surface, so that the carrying surface becomes slippery.

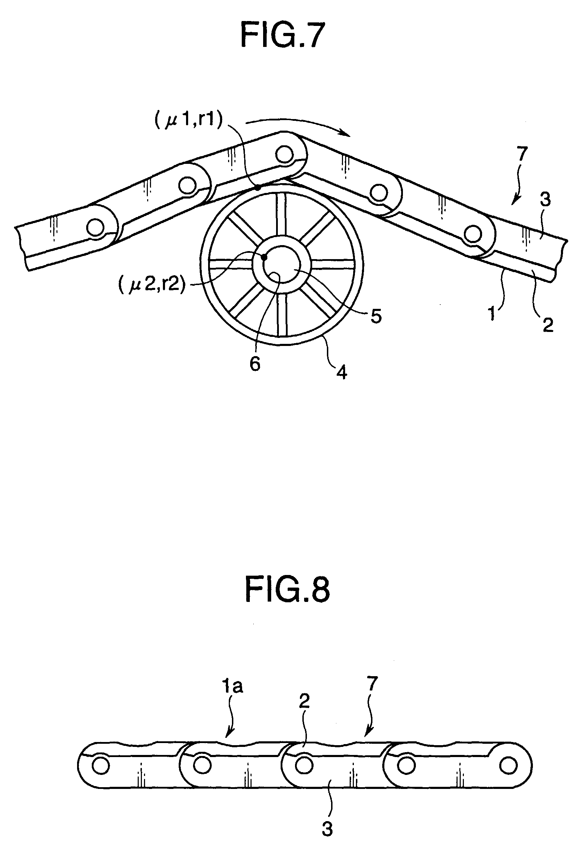

As shown in FIG. 7, when the product of µl (the friction coefficient between the carrying surface 1 of the slat 2 of each link 3 and the peripheral surface of the return roller 4) and r1 (the radius of the return roller 4) is smaller than the product of µ2 (the friction coefficient between the peripheral surface of the shaft 5) and r2 (the radius of the shaft hole 6); i.e., when µ1xr1<µ2xr2, the return roller 4 is not rotated, and the slats 2 slide on the peripheral surface of the return roller 4.

If the slat chain 7 slides on the peripheral surface of the unrotating return roller 4 over a long period of time while sagging downward upstream and downstream of the return roller by its own weight as shown in FIG. 7, the carrying surfaces 1 of the slats 2 will each eccentrically wear into a concave surface 1a, as shown in FIG. 8, potentially causing falling of the articles, such as PET bottles, having an unstable bottom shape.

An increase in the diameter of the return roller facilitates rotation of the return roller even when frictional force induced between the carrying surface of the slat and the peripheral surface of the return roller is relatively small. However, the height of the conveyor frame increases accordingly.

Further, during travel of the slat chain, noise is generated due to repeated collision between the carrying surface of the slat and the return roller, thus impairing working conditions.

### SUMMARY OF THE INVENTION

An object of the present invention is to solve the above-mentioned problems in the conventional return roller for a slat conveyor and to provide a return roller for a slat conveyor capable of preventing wear of the carrying surface of a slat despite contact between the return roller and the carrying surface and capable of reducing noise resulting from collision between the slat and the return roller.

To achieve the above object, there is provided a return roller for a slat conveyor in which a slat chain is driven in a circulative manner along an upper forwarding passage and along a lower return passage and such that an article placed on a carrying surface of a slat is conveyed along the forwarding passage, and the return roller supports the slat chain from the lower side thereof at the lower return passage. The return roller comprises a roller core and an external ring. The roller core has a shaft hole formed therein at a central portion and axially extending therethrough. A shaft fixed to a conveyor frame is inserted through the shaft hole such that the roller core is rotatably supported by the shaft. The external ring is concentrically fitted onto the roller core. The outer circumferential surface of the external ring supports the carrying surface of the slat. The product of the radius of the outer circumferential surface of the external ring and the friction coefficient between the outer circumferential surface of the external ring and the carrying surface of the slat is set greater than the product of the radius of the shaft hole and the friction coefficient between the shaft hole and the shaft. The outer circumferential surface of the external ring is formed from an elastomer softer than the carrying surface of the slat.

Through employment of the above frictional relationship, as the slat chain travels, the return roller smoothly rotates about the shaft without slippage between the return roller and the carrying surface of the slat. Further, through use of such an elastomer as material for the outer circumferential surface of the external ring, the carrying surface of the slat is provided with protection against developing scratches or wear which might otherwise result from contact with the return roller.

As a result, the flatness of the carrying surfaces of the slats is maintained, so that the capability of stable conveyance of even articles that are unstable due to, for example, high center of gravity can be maintained over a long term.

Use of the above-mentioned elastomer as material for the outer circumferential surface of the external ring further effects a reduction in noise of collision between the return roller and the slat during travel of the slat chain.

Preferably, an engagement portion is formed on the outer circumferential surface of the roller core and in the inner circumferential surface of the external ring. The engagement portions are engaged together to thereby prevent relative dislocation between the external ring and the roller core.

The above engagement feature prevents coming-off or dislocation of the external ring from the roller core which might otherwise result from vibration of the return roller induced by the slats. Thus, the durability of the return roller can be increased.

### BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:
FIG. 1 is a schematic side view showing a slat conveyor in which return rollers according to the present invention are incorporated;
FIG. 2 is a sectional view taken along line II-II of FIG. 1;
FIG. 3 is a side view showing one of the return rollers of the slat conveyor according to a first embodiment of the present invention;
FIG. 4 is a sectional view taken along line IV-IV of FIG. 3;
FIG. 4A is an enlarged view of a portion of FIG. 4;
FIG. 4B is an enlarged view of another portion of FIG. 4;
FIG. 5 is a side view showing a return roller, with parts omitted for clarity, of the slat conveyor according to a second embodiment of the present invention;
FIG. 6 is a sectional view taken along line VI-VI of FIG. 3;
FIG. 7 is a view showing the manner in which a slat chain is supported by a conventional return roller; and
FIG. 8 is a view showing a wear of the slat chain caused by contact with the conventional return roller.

### DESCRIPTION OF THE PREFERRED EMBODIMENTS

Certain preferred structural embodiments of the present invention will next be described in detail with reference to the drawings.

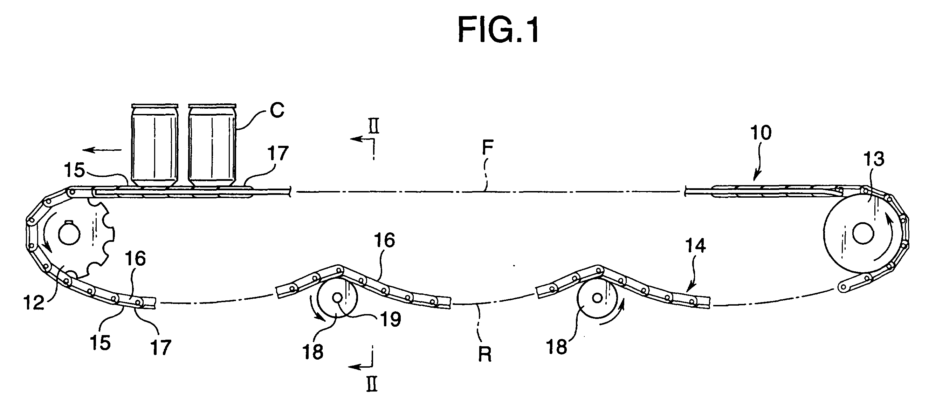

Referring now to FIG. 1, there is shown a slat conveyor 10 embodying the present invention, which is used to convey articles, such as PET bottles, or cans C.

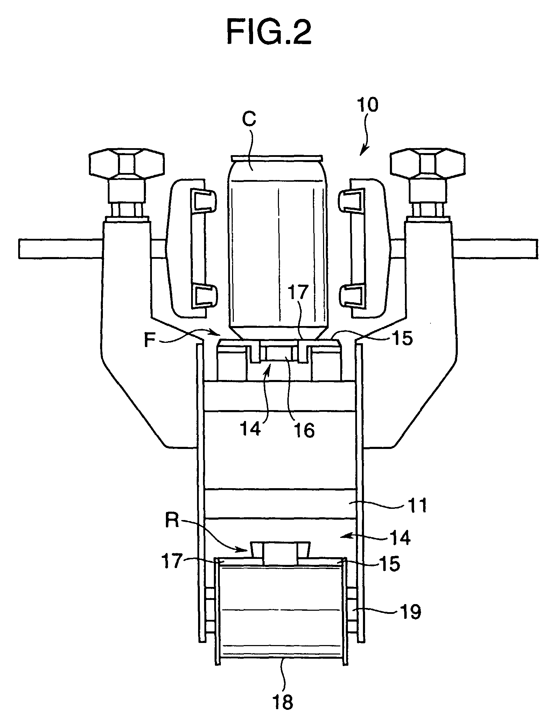

The slat conveyor 10 generally includes a conveyor frame 11 (FIG. 2), a driving sprocket 12, a driven pulley 13, and a slat chain 14. The driving sprocket 12 and the driven pulley 13 are located in the vicinity of longitudinally opposite end portions of the conveyor frame 11 (FIG. 2). The slat chain 14 is looped around, and extends between, the driving sprocket 12 and the driven pulley 13 along an upper forwarding passage F and a lower return passage R of the conveyor frame 11 (FIG. 2).

The slat chain 14 includes a number of links 16 which are each integrated with a slat 15 molded of synthetic resin. The links 16 are endlessly pin-connected such that the slats 15 face outward. The slat chain 14 is driven in a circulative manner such that the article C placed on a top surface (carrying surface) 17 of each of the slats 15 is conveyed along the forwarding passage F.

The slat conveyor 10 further has at least one return roller 18 (two in the illustrated embodiment) in order to prevent the slat chain 14 from sagging during travel along the return passage R. The return roller 18 is rotatably mounted on a horizontal shaft 19 fixedly attached to the conveyor frame 11 (FIG. 2). The return roller 18 supports the downward-facing carrying surfaces 17 of the slats 15 of the slat chain 14. As the slat chain 14 travels, the return roller 18 is rotated by means of a frictional force induced between the carrying surface 17 and the peripheral surface of the return roller 18.

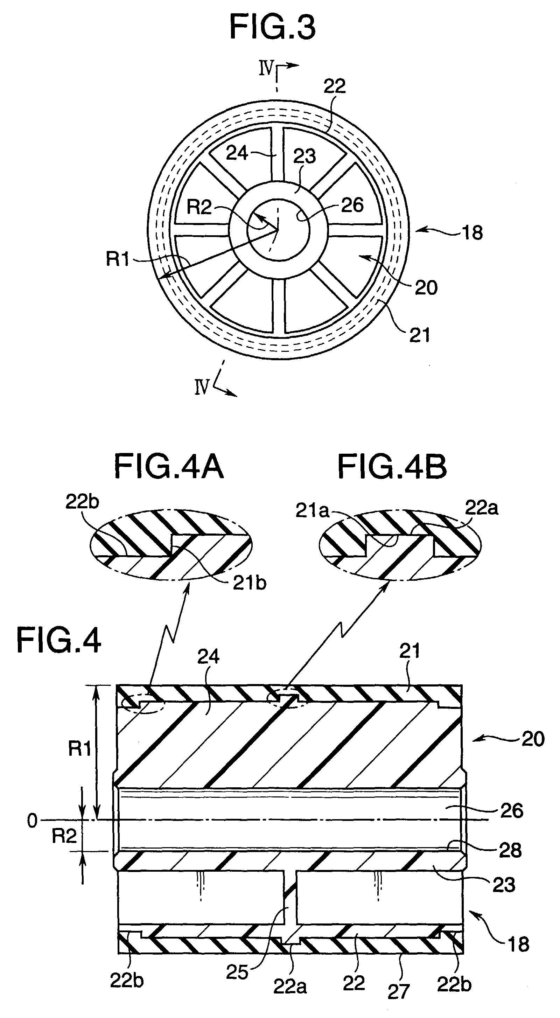

As shown in FIGS. 3 and 4, the return roller 18 assumes a dual structure in which an external ring 21 is concentrically fitted onto a roller core 20.

The roller core 20 includes a rim 22, a boss 23, and a plurality of radially provided ribs 24 for connecting the rim 22 and the boss 23. The rim 22, the boss 23, and the ribs 24 are integrally formed from a wear-resistant material of high lubricity, such as polyamide or polyacetal. An auxiliary rib 25 is provided at an axially central portion of the roller core 20 in such a manner as to cross the ribs 24, thereby improving rigidity of the roller core 20.

The roller core 20 has an axial shaft hole 26 extending through a central portion of the boss 23. The horizontal shaft 11 fixed to the conveyor frame 11 (FIG. 2) is inserted through the shaft hole 26. An annular flange-like engagement projection 22a and a stepped engagement portion 22b are circumferentially and continuously formed on an outer circumferential surface of the rim 22 at an axially central portion and at opposite end portions, respectively, of the rim 22 for a purpose described below.

The external ring 21 is formed from an elastomer having a hardness of 25 to 50 on the Shore D scale. The elastomer is softer than the roller core 20 and has a large friction coefficient in relation to the resin slat 15 (FIGS. 1 and 2). Examples of such an elastomer include polyamide elastomers, polyester elastomers, and polyurethane elastomers.

As shown in FIGS. 4A and 4B, an annular engagement recess 21a and a stepped engagement portion 21b are formed on the inner circumferential surface of the external ring 21 at positions corresponding to the engagement projection 22a and the stepped engagement portion 22b, respectively. The roller core 20 and the external ring 21 are prevented from separating from each other through engagement between the engagement projection 22a and the engagement recess 21a and between the stepped engagement portions 22b and 21b.

The roller core 20 and the external ring 21 are integrated into the return roller 18 through, for example, bonding, press fit, or double-shot molding.

Here, the relation "µ1lxR1>µ2xR2" is satisfied, where µ1 represents the friction coefficient between the outer circumferential surface 27 of the external ring 21 and the carrying surface 17 (FIGS. 1 and 2) of the slat; R1 represents the radius of the outer circumferential surface 27 of the external ring 21; µ2 represents the friction coefficient between a circumferential wall surface 28 defining the shaft hole 26 formed in the roller core 20 and an outer peripheral surface of the shaft 11 (FIG. 2) inserted through the shaft hole 26; and R2 represents the radius of the shaft hole 26.

When the above relation (µ1xR1>µ2xR2) is satisfied, a moment about shaft center O associated with a frictional force induced between the carrying surface 17 (FIG. 2) of the slat 15 and the return roller 18 becomes greater than a moment about shaft center O associated with a frictional force induced between the shaft 11 (FIG. 2) and the wall surface 28 of the shaft hole 26. Accordingly, as the slat chain 14 (FIGS. 1 and 2) travels, the return roller 18 smoothly rotates about the shaft without slippage between the return roller 18 and the carrying surface 17 of the slat 15.

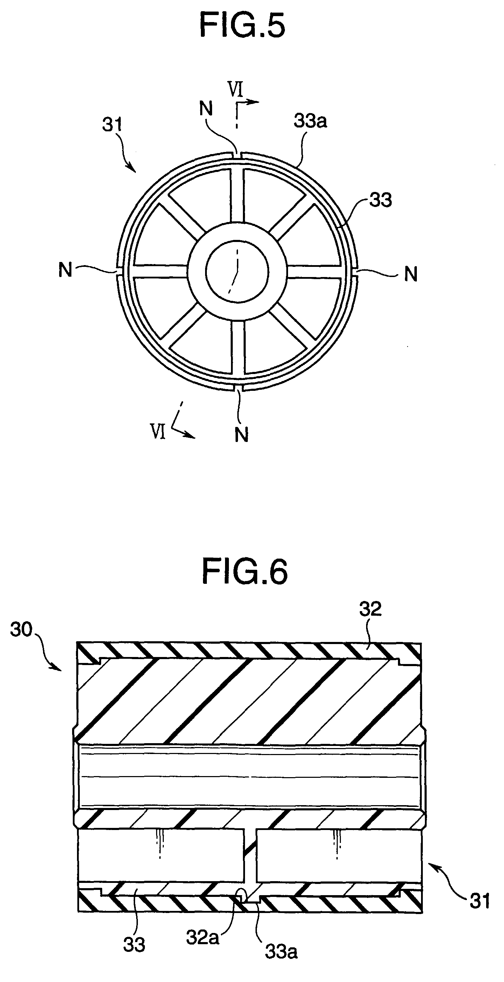

FIGS. 5 and 6 show a return roller 30 according to a second embodiment of the present invention. Like in the foregoing embodiment shown in FIGS. 3 and 4, the return roller 30 of this embodiment is composed of a roller core 31 and an external ring 32, but in FIG. 5 the external ring 32 is omitted for clarity.

The roller core 31 has an annular engagement projection 33a formed on the outer circumferential surface of a rim 33 of the roller core 31 at an axially central portion of the rim 33. The engagement projection 33a is not continuous but is interrupted by four equally-spaced notches N circumferentially formed in the engagement projection 33a.

On the other hand, as shown in FIG. 6, an engagement recess 32a to engage the engagement projection 33a is formed in the inner circumferential surface of the external ring 32. The engagement recess 33a has interrupted portions at circumferential positions corresponding to the notches N. Therefore, when the external ring 32 is fitted onto the roller core 31, the uncontinuous portions engage the notches N. Thus, the dislocation between the external ring 32 and the roller core 31 can be prevented not only axially but also circumferentially. As a result, the engagement between the roller core 31 and the external ring 32 becomes firmer than that of the first embodiment shown in FIGS. 3 and 4.

When the external ring 32 is formed on the outer circumference of the roller core 31 by double-shot molding, the engagement recess 32a to engage the engagement projection 33a is automatically formed in the inner circumferential surface of the external ring 32. The structure of the external ring 32 except the engagement feature for engagement with the engagement projection 33a is the same as that of the return roller 18 shown in FIGS. 3 and 4.

The engagement feature for effecting firm bond between the external ring 32 and the roller core 31 is not particularly limited, but may assume any form so long as a relative movement between the external ring 32 and the roller core 31 can be prevented axially and circumferentially.

The aforementioned engagement feature is not required if the external ring 21; 32 and the roller core 20; 31 is fixedly engaged by, for example, bonding. The roller core 20; 31 may be a resin-molded product or a metallic product, such as an aluminum die-cast product.

Further, the roller core 20; 31 may include a plurality of component elements of different materials. For example, the boss 22, in which the shaft hole 26 is formed for slidable contact with a steel shaft, may be of an oil-bearing alloy, and the other component element may be of a resin.

Obviously, numerous modifications and variations of the present invention are possible in light of the above teachings. It is therefore to be understood that within the scope of the appended claims, the present invention may be practiced otherwise than as specifically described herein.

## Claims

1. A return roller for a slat conveyor in which a slat chain is driven in a circulative manner along an upper forwarding passage and along a lower return passage and such that an article placed on a carrying surface of a slat is conveyed along the forwarding passage, and the return roller supports the slat chain from the lower side thereof at the lower return passage, said return roller comprising:
a roller core having a shaft hole formed therein at a central portion and axially extending therethrough, a shaft fixed to a conveyor frame being inserted through the shaft hole such that said roller core is rotatably supported by the shaft; and
an external ring being concentrically fitted onto said roller core, an outer circumferential surface of said external ring supporting the carrying surface of the slat, the outer circumferential surface of said external ring being formed from an elastomer softer than the carrying surface of the slat, wherein
the product of a radius of the outer circumferential surface of said external ring and a friction coefficient between the outer circumferential surface of said external ring and the carrying surface of the slat is greater than the product of a radius of the shaft hole and a friction coefficient between the shaft hole and the shaft.

2. A return roller for a slat conveyor according to Claim 1, wherein said roller core is formed from a wear-resistant material of high lubricity.

3. A return roller for a slat conveyor according to Claim 1, wherein said external ring has a hardness of 20 to 50 on the Shore D scale.

4. A return roller for a slat conveyor according to Claim 2, wherein said external ring has a hardness of 20 to 50 on the Shore D scale.

5. A return roller for a slat conveyor according to Claim 1, wherein said roller core has a first engagement portion formed on an outer circumferential surface thereof, sand external ring has a second engagement portion formed in an inner circumferential surface thereof, said first and second engagement portions being engaged together to thereby prevent relative dislocation between said external ring and said roller core.

6. A return roller for a slat conveyor according to Claim 5, wherein each of said first and second engagement portions extends circumferentially in order to prevent axial relative dislocation between said external ring and said roller core.

7. A return roller for a slat conveyor according to Claim 6, wherein each of the first and second engagement portions has an interrupted portion for preventing circumferential relative dislocation between said external ring and said roller core.

8. A slat conveyor comprising:
a conveyor frame defining an upper forwarding passage and a lower return passage and having at least one horizontal shaft located at said lower return passage;
a slat chain composed of a number of pin-connected links each including a slat having a carrying surface on which an article to be conveyed is placed, said slat chain being driven in a circulative manner along said upper forwarding passage and said lower return passage such that the article placed on said carrying surface of said slat is conveyed along said upper forwarding passage; and
a return roller rotatably mounted on said shaft and supporting said slat chain from the lower side thereof at said lower return passage, said return roller including
a roller core having an axial central shaft hole slidably receiving therein said shaft, and
an external ring concentrically fitted onto said roller core, said external ring having an outer circumferential surface supporting said carrying surface of said slat, said outer circumferential surface being formed from an elastomer softer than said carrying surface of said slat, wherein
the product of a radius of said outer circumferential surface of said external ring and a friction coefficient between said outer circumferential surface of said external ring and said carrying surface of said slat is greater than the product of a radius of said shaft hole in said roller core and a friction coefficient between said shaft hole and said shaft.

9. A slat conveyor according to Claim 8, wherein said roller core is formed from a wear-resistant material of high lubricity.

10. A slat conveyor according to Claim 8, wherein said external ring has a hardness of 20 to 50 on the Shore D scale.

11. A slat conveyor according to Claim 9, wherein said external ring has a hardness of 20 to 50 on the Shore D scale.

12. A slat conveyor according to Claim 8, wherein said roller core has a first engagement portion formed on an outer circumferential surface thereof, sand external ring has a second engagement portion formed in an inner circumferential surface thereof, said first and second engagement portions being engaged together to thereby prevent relative dislocation between said external ring and said roller core.

13. A slat conveyor according to Claim 12, wherein each of said first and second engagement portions extends circumferentially in order to prevent axial relative dislocation between said external ring and said roller core.

14. A slat conveyor according to Claim 13, wherein each of the first and second engagement portions has an interrupted portion for preventing circumferential relative dislocation between said external ring and said roller core.
